# EUROPÄISCHE PATENTANMELDUNG

(11) **EP 1 450 320 A1**
(43) Veröffentlichungstag der Anmeldung: **25.08.2004**
(21) Anmeldenummer: 03100432.8
(22) Anmeldetag: 21.02.2003
(51) Int. Cl.: G07F 19/00

(54) **Zahlungsmodul mit mehreren Zahlungskonten, Zahlungssystem und Zahlungsverfahren**

(71) Anmelder: Swisscom Mobile AG, 3050 Bern (CH)
(72) Erfinder: Busch Lauper, Karin, 3014, Bern (CH); Cantini, Renato, 1782, Belfaux (CH)
(74) Vertreter: Saam, Christophe

(57) **Zusammenfassung**

Zahlungsverfahren zwischen einem Mobilteilnehmer (1) und einem Anbieter (2) ,
wobei der Mobilteilnehmer über ein tragbares persönliches Identifizierungsmodul (10) verfügt, das zur Identifizierung in einem Mobilfunknetz (3) bestimmt ist,
wobei das benannte Identifizierungsmodul an mehrere Geldkonten (100) gebunden ist
und wobei der benannte Anbieter an mehrere Geldkonten (200) gebunden ist,
dadurch gekennzeichnet, dass das Paar von Geldkonten, das für eine Zahlungstransaktion verwendet wird, automatisch von einem Geldkontenbestimmungsmodul (310) bestimmt wird.

## Beschreibung

Die vorliegende Erfindung betrifft ein Zahlungsmodul, insbesondere eine elektronische Zahlungskarte, sowie ein Zahlungssystem und ein Zahlungsverfahren um Zahlungen mit dieser Karte auszuführen.

Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip) in welchen unter anderem die Identifizierung des Kunden gespeichert ist. Um eine Transaktion zu tätigen (zum Beispiel um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im voraus nachladen, Kontoauszüge prüfen, usw.

Um diese Probleme zu vermeiden, wurde unter anderem in der Patentanmeldung WO98/37524 vorgeschlagen, die SIM-Karte (Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben.

Es sind beim bisherigen Stand der Technik auch Zahlungsverfahren bekannt, bei welchen Transaktionsdaten zwischen dem Benutzermobilgerät und einem Händlerterminal nicht direkt, sondern über eine Zahlungsplattform im Mobilfunknetz übertragen werden. Dabei werden Belege oder eine Referenz zur Transaktion, oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Wird eine solche an mehrere Konten gebundene Karte mit einem (oft ebenfalls an mehrere Konten gebundenen) Terminal verwendet, muss der Benutzer bestimmen, welches Geldkonto für die Transaktion verwendet werden muss. Ist beispielsweise eine Karte an ein Prepaid-Wertkonto und an mehrere Kredit- und/oder Debit-Kartenkonten gebunden, kann der Benutzer meist in einem Menu im Händlerterminal entscheiden, welches Geld konto belastet werden soll. Dabei kann er verschiedene Parameter berücksichtigen, beispielsweise die Bonität jedes Kontos, die Transaktionskosten, die Sicherheit, den Komfort usw.

Anbieter haben bei solchen Verfahren kaum eine Möglichkeit, die Auswahl des Benutzers zwischen den verfügbaren Geldkonten zu beeinflussen.

Eine Aufgabe der vorliegenden Erfindung ist es, ein Verfahren und ein System vorzuschlagen, welche erlauben, für Zahlungstransaktionen mehr Komfort und mehr Sicherheit anzubieten.

Eine andere Aufgabe ist es, ein Verfahren und ein System vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren erreicht, um Zahlungstransaktionen zwischen einem Mobilteilnehmer (Benutzer) und einem Anbieter durchzuführen,
wobei der Mobilteilnehmer über ein tragbares persönliches Identifizierungsmodul verfügt, das zur Identifizierung in einem Mobilfunknetz bestimmt ist,
und wobei der Zahlungsdienst, der für eine Zahlungstransaktion verwendet wird, in Abhängigkeit von vorbestimmten Regeln von einem Bestimmungsmodul bestimmt wird.

Dies hat für den Benutzer den Vorteil, dass mehrere Geldkarten für mehrere Zahlungsdienste (zum Beispiel Kredit, Debit oder Wert-Zahlungsdienst) durch seine Identifizierungskarte im Mobilgerät, welche er ohnehin zur Hand hat, ersetzt werden. Dadurch kann die Anzahl von Karten, die mitgeführt werden müssen, erheblich reduziert werden und die Akzeptanz für eine Affiliation an neue Geldkonten wird erhöht, wenn dies keine zusätzliche Karte erfordert. Für die Finanzdienstanbieter und für die Finanzinstitute hat diese Lösung den Vorteil, dass sie keine aufwendigen Geldkarten herstellen, verteilen und verwalten müssen.

In einer bevorzugten Variante können mehrere Geldkonten an das benannte Identifizierungsmodul gebunden sein und mehrere andere Geldkonten an den benannten Anbieter. Das Paar von Geldkonten, das für eine Zahlungstransaktion verwendet wird, wird in Abhängigkeit der benannten Parameter vom Geldkontenbestimmungsmodul bestimmt.

Dies hat den Vorteil, dass das Bestimmungsmodul nicht nur bestimmt, ob eine Transaktion beispielsweise mit einem Kreditkartendienst oder mit einem Debitkartendienst durchgeführt werden soll, sondern auch zwischen mehreren Geldkonten, die an Kredit- oder Debitkartendienste gebunden sind, auswählt.

Da automatisch bestimmt wird, welches an die SIM-Karte gebundene Geldkonto für jede Transaktion verwendet wird, kann die Auswahl abhängig von vielen (einschliesslich dem Benutzer unbekannten) Parametern getroffen werden. Dies erlaubt dem Benutzer und dem Anbieter stets ein optimales Paar von Geldkonten auszuwählen.

In einer bevorzugten Variante werden mindestens gewisse Geldkonten von einer Plattform in der Infrastruktur eines Mobilfunknetzes betrieben. Transaktionsdaten für Transaktionen mit mehreren Geldkonten, die eventuell von mehreren Zahlungsdienstanbietern und/oder mehreren Finanzinstituten angeboten werden, werden somit über eine gemeinsame Plattform übertragen und in dieser Zahlungsplattform bewertet. Dies hat den Vorteil, dass ein allfälliger Betrug mit grösserer Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können.

In einer bevorzugten Variante können Geldbeträge zwischen verschiedenen Geldkonten eines Benutzers, oder sogar zwischen verschiedenen Benutzern, vorzugsweise über die gemeinsame Plattform übertragen werden. Insbesondere wenn ein Anbieter gleichzeitig ein Mobilteilnehmer ist, können somit Peer-to-Peer Geldtransaktionen über die vom Netzwerkbetreiber betriebene Zahlungsplattform durchgeführt werden. Dies erlaubt zum Beispiel, ein Prepaid-Konto bei Überschreitungen der Ausgabenlimite, auf Anforderung oder sogar automatisch (wenn vordefinierte Kriterien erfüllt sind) aus einem anderen Geldkonto vom selben oder von einem anderen Benutzer nachzuladen. Dies erlaubt auch, Geldbeträge von Personen zu Personen zu übertragen. Es können somit auch Debit- oder Kreditgrenzen für geschlossene Gruppen von Benutzern definiert werden.

Es können auch proaktive Nachladungsmittel vorgesehen werden, mit welchen Wert- und Debitkonten automatisch nachgeladen werden, wenn gewisse Kriterien erfüllt sind, beispielsweise wenn der Saldo auf einem Konto eine untere Schwelle erreicht.

Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen. Das erfindungsgemässe System und Verfahren weist vorzugsweise Mittel zur Übertragung der Geschäftsbedingungen an den Benutzer auf, womit sichergestellt wird, dass diese Geschäftsbedingungen vom Benutzer gelesen wurden, sowie Mittel zur Sendung einer Bestätigung, dass diese Geschäftsbedingungen akzeptiert wurden.

Die Verfügbarkeit beziehungsweise die Sperrung eines bestimmten Geldkontos, das an eine Identifizierungskarte gebunden ist, kann abhängig von internen Parametern des Mobilfunknetzes veranlasst werden. Es ist zum Beispiel im Rahmen der Erfindung möglich, ein bestimmtes Geldkonto zu sperren, wenn sich der Benutzer ausserhalb eines vordefinierten geographischen Gebiets befindet und/oder während vordefinierten Zeitperioden.

Die vorliegende Erfindung wird mit Hilfe der als Beispiel gegebenen Beschreibung besser verständlich und durch die beiliegenden Figuren veranschaulicht:
Die Figur 1 zeigt ein Blockschema, das den Informationsfluss in einer bevorzugten Ausführungsform des Systems der Erfindung zeigt.
Die Figur 2 zeigt ein Blockschema, das mögliche Datenkanäle zwischen den verschiedenen Akteuren des Systems als Beispiel veranschaulicht.

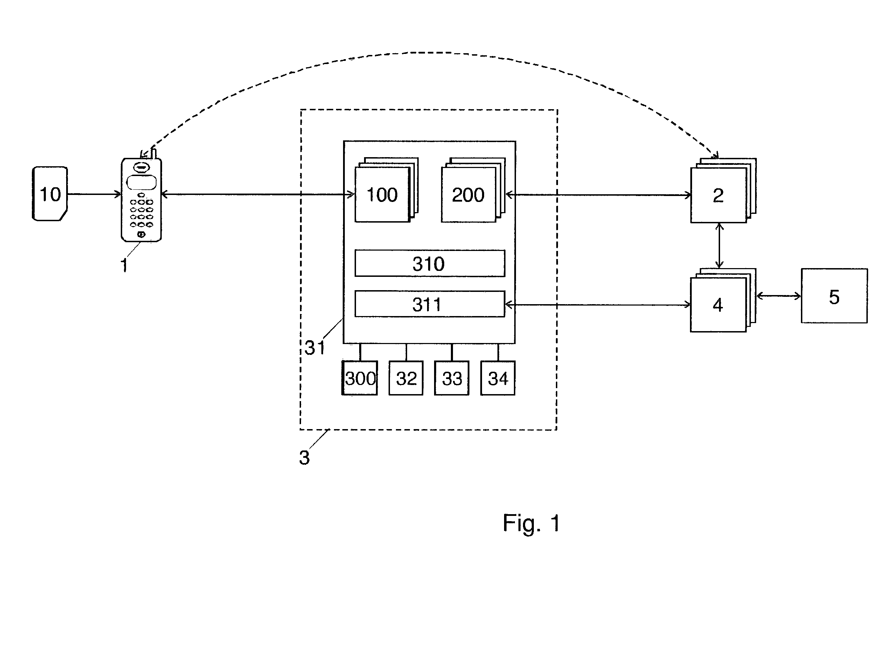

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit " Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das ldentifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die hier nicht beschrieben werden.

Ebenfalls an diese Infrastruktur angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzern bestellen und bezahlen können, so dass die formelle Trennung zwischen Benutzern und Anbietern eher theoretisch ist. Anbieter können beispielsweise Händler (einschliesslich Online-Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminals (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und Anbieter 2 verfügen je über ein oder mehrere Geldkonten bei einem oder mehreren Finanzinstituten 5 auf die über eine Vielzahl von Zahlungsdienstanbietern 4 zugegriffen werden kann. Zahlungsdienstanbieter sind beispielsweise Kreditkarten-Firmen, Debitkartenfirmen, Banken, Postämter und andere Finanzinstitute, die Zahlungskarten herausgeben, einschliesslich der Mobilfunknetzbetreiber. Finanzinstitute sind zum Beispiel Banken, Post und andere Organisationen, die Geldkonten von Dritten verwalten. Jeder Zahlungsdienstanbieter 4 bietet einen oder mehrere Zahlungsdienste an, welche von Benutzern und Anbietern affiliiert werden können. Jeder Benutzer und Anbieter verfügt bei den Finanzinstituten über ein Geldkonto für jeden affiliierten Zahlungsdienst. Bei einem Kredit- oder Debitkartendienst wird das Geldkonto typischerweise beim Finanzinstitut abgelegt; bei Wertkarten hingegen befindet sich der Geldbetrag in einem Geldkonto in einer Benutzerchipkarte.

Während einem Zahlungstransaktionsvorgang werden typischerweise am Anfang Zahlungstransaktionsdaten und/oder Zahlungsautorisierungsdaten zwischen einem Benutzer und einem Anbieter ausgetauscht. Nach einem gewissen Zeitpunkt (zum Beispiel nachdem eine Bestellung beim Anbieter bestätigt wurde) wird der Benutzer an den Zahlungsdienstanbieter geleitet. Zahlungstransaktionsdaten werden dann zwischen dem Benutzer und dem Anbieter übertragen. Dieses unter anderem in WO02/0523 beschriebene Verfahren gewährleistet die Vertraulichkeit der Zahlungsdaten gegenüber den Anbietern und deren Anonymität gegenüber den Zahlungsdienstanbietern.

Als Sonderfall von Geldkonten, die an eine Karte 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprachund Datenverbindungen durch das Netz, zum Kauf von zusätzlichen Diensten, einschliesslich das Nachladen von Ringtönen, Bildern, usw.

Zahlungsdienstanbieter verwenden den Server 4, um Benutzer für eine Transaktion zu identifizieren beziehungsweise zu authentifizieren, und um Geldtransaktion zu gestatten oder zu sperren. Zahlungsdienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Zahlungsdienstanbietern 4 (beispielsweise mittels angeschlossener Finanzrechner 5) durchgeführt.

Gemäss den bisherigen Zahlungsverfahren bekommt jeder Benutzer eine physische Karte, um seine Affiliation an einen Zahlungsdienst vor einer Geldtransaktion zu beweisen. Jedes Geldkonto wird dann an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

Erfindungsgemäss werden mehrere Geldkonten, die mehreren Zahlungsdiensten von mehreren Zahlungsdienstanbietern 4 entsprechen können, an ein gemeinsames Identifizierungsmodul 10 gebunden. In einer bevorzugten Variante dient die SIM-Karte 10, die zur Identifizierung des Benutzers 1 in einem Mobilfunknetz bestimmt ist, als multifunktionelle Zahlungskarte, die an mehrere Geldkonten gebunden ist. Die Affiliation an mehreren Zahlungsdienste wird somit mit dem Besitz einer einzigen Chipkarte bewiesen.

Umgekehrt kann auch ein einzelnes Geldkonto an mehrere Identifizierungsmodule gebunden sein. Dies erlaubt zum Beispiel, das in einer Familie oder einem Unternehmen jedes Mitglied über sein eigenes Identifizierungsmodul verfügt, um auf ein gemeinsames Geldkonto zuzugreifen.

Das Identifizierungsmodul 10 enthält einen Speicher von jenen Bereichen die vom Mobilfunkbetreiber den Zahlungsdienstanbietern zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles usw) ablegen kann. In einer anderen bevorzugten Variante der Erfindung werden diese Daten (oder ein Teil dieser Daten) in einer Zahlungsplattform 31 in der Infrastruktur des Mobilfunknetzes abgelegt. Die verschiedenen Geldkonten, an welche eine Identifizierungskarte 10 gebunden ist, werden somit in einem virtuellen Wallet 100 in der Plattform 3 zusammengeführt. Ein logischer Link zwischen einer physischen Karte 10 und dem entsprechenden Wallet 100 von Geldkonten affiliierter Zahlungsdienste kann beispielsweise über die Kartennummer IMSI (International Mobile Subscriber Identity), die MSISDN (Mobile Subscriber ISDN Number) und/oder die ICCID (Integrated Circuit Chip Identification) erfolgen.

Auf ähnliche Weise können alle Geldkonten eines Anbieters 2 in einem Wallet 200 in der Zahlungsplattform 3 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem ein automatisches Geldkontenbestimmungsmodul, um das ideale Paar von Geldkonten, welches vom Mobilteilnehmer-Identifizierungsmodul und von dem Anbieter-Zahlungsterminal für eine Zahlungstransaktion verwendet wird, automatisch zu bestimmen. Dieses Modul wird später ausführlicher beschrieben. Ein proaktives Nachlademodul 311 wird zur Nachladung der verschiedenen Geldkonten (manuell oder automatisch initiiert von verschiedenen Parametern) verwendet.

Die infrastruktur des Mobilfunknetzes 3 umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird ein weiter unten beschriebenes Betrugsdetektionsmodul veranschaulicht. Dieses Modul verwendet sowohl Parameter, die innerhalb des Mobilfunknetzes bekannt sind (zum Beispiel Benutzerstandort und Anbieterstandort) und transaktionsspezifische Parameter (zum Beispiel die Identität der Transatkionspartner oder den Transaktionsbetrag) um verdächtige Transaktionen oder Karten 10 aufzudecken. In einer nicht dargestellten Variante wird dieses Modul von den Zahlungsdienstanbietern (statt vom Mobilfunknetzbetreiber) betrieben.

Das Element 34 ist eine weiter unten beschriebene Datenbank, in welcher die Geschäftsbedingungen der verschiedenen Zahlungsdienstanbieter abgelegt sind. Weiter unten dargestellte Mittel sind vorgesehen, um sicherzustellen, dass diese Bedingungen von den Benutzern akzeptiert sind, bevor ein Geldkonto freigeschaltet wird.

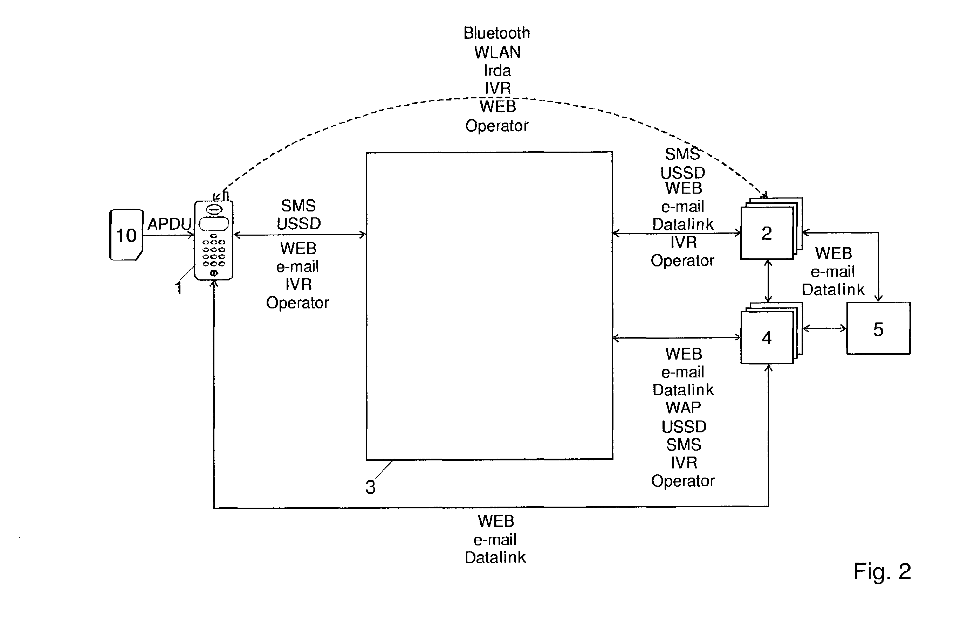

Die Figur 2 zeigt die möglichen Datenkanäle, die für eine Zahlungstransaktion zwischen den verschiedenen Aktoren des Systems verwendet werden können.

Das Identifizierungsmodul 10 wird typischerweise als ISO-Chipkarte im Mobilgerät 1 untergebracht und kommuniziert über APDU-Befehle mit diesem Mobilgerät. Das Mobilgerät ist beispielsweise ein GSM-Mobilgerät und kann somit über SMS (Short Message System) oder USSD (Unstructured Supplementary Service Data) oder über geroutete Datenpakete, Meldungen mit der Plattform 3 austauschen. Als Variante können Daten auch über Internet (zum Beispiel mit einem WEB oder WAP-Browser oder per E-Mail) zwischen dem Mobilgerät 1 und der Plattform 3 übertragen werden. In einer Variante verfügt die Plattform 3 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle (zum Beispiel eine WLAN oder Bluetooth-Schnittstelle) an die Plattform 3 gesendet.

Auf ähnliche Weise können Anbieter 2 ebenfalls über SMS, USSD, E-Mail, WEB, WAP, über einen IVR und/oder über einen menschlichen Operator, Daten mit der Zahlungsplattform 3 austauschen. Andere Datenverbindungen (zum Beispiel über geroutetes Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Zahlungsdienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Plattform 3, mit den Benutzern 1, (wenn nötig) mit den Anbietern 2 und gegebenenfalls mit den Finanzservern 5 verbunden. Die Verbindung zwischen der Zahlungsplattform 31 und den Zahlungsdienstanbietern 4 ist vorzugsweise gesichert (zum Beispiel über ein virtuelles privates Netzwerk). Zahlungsdaten zwischen der Zahlungsplattform 31 und den Zahlungsdienstanbietern können auch in Daten, die mehrere Zahlungstransaktionen betreffen, gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter affiliiert werden. Dementsprechend können Identifizierungsmodule 10 und Terminals der Anbieter an mehrere Geldkonten 100 beziehungsweise 200 gebunden werden. Will ein Benutzer 1 eine Zahlungstransaktion mit einem Anbieter 2 ausführen, muss vorerst entschieden werden, mit welchem Zahlungsdienst die Transaktion durchgeführt wird. Beispielsweise muss entschieden werden, ob die Transaktion mit einem Kreditkarten- Debitkartenoder Wertkarten-Zahlungsdienst durchgeführt wird und mit welchem Anbieter dieses Typs von Diensten.

Erfindungsgemäss wird diese Entscheidung automatisch von einem Geldkontenbestimmungsmodul 310 getroffen. In der dargestellten bevorzugten Ausführungsform befindet sich dieses Modul in der Zahlungsplattform 31 und wird somit vom Betreiber des Mobilfunknetzes betrieben. Dies hat den Vorteil, dass dieser Betreiber gegenüber den verschiedenen Zahlungsdienstanbietern neutral sein kann und dass kein Anbieter bevorzugt wird. Ausserdem kann das Modul 310 Parameter verwenden, die innerhalb der Infrastruktur des Netzes bestimmt und bekannt sind.

Das Geldkontenbestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Zahlungsdienstanbietern 4 kommunizieren.

Die Entscheidung, ein bestimmtes Geldkonto für eine bestimmte Zahlungstransaktion zu verwenden, kann von einem oder mehreren der folgenden Parameter abhängig sein:
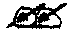 Transaktionsbetrag. Wertkarten sind zum Beispiel gut geeignet, um kleine Beträge mit kleinen Kosten zu bezahlen, während Kreditkarten oft für grössere Beträge eingesetzt werden. Zwischen verschiedenen Kreditkarten können die Geschäftsbedingungen unterschiedlich sein, so dass ein bestimmter Kreditkarten-Zahlungsdienst für sehr hohe Beträge bevorzugt werden kann. Debitkarten werden oft für mittlere Beträge benutzt.
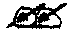 Bonuspunkte. Viele Zahlungsdienstanbieter bieten Bonuspunktesammlungsprogramme an, um die Auswahl der Benutzer zu beeinflussen. Es werden oft Belohnungen gegeben, wenn eine gewisse Anzahl von Transaktionen, oder ein gewisser Betrag, mit einer bestimmten Geldkarte ausgegeben wurde. Das Geldkontenbestimmungsmodul kann diese Bonuspunktesammlungsprogramme kennen und den Zahlungsdienst derart auswählen, dass die Benutzer besser von diesen Programmen profitieren. Zu diesem Zweck kann das Bestimmungsmodul für jedes Geldkonto den Saldo von Bonuspunkten ermitteln, oder diese Saldi von den Zahlungsdienstanbietern bekommen.
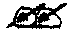 Vorbestimmte Mobilteilnehmerpräferenzen. Mobilteilnehmer können bestimmen, dass sie am liebsten mit einem bestimmten Geldkonto bezahlen wollen.
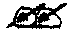 Sicherheitsfaktoren, die mit der Verwendung jedes Geldkontos für den Mobilteilnehmer und/oder für den Anbieter vorhanden sind. Gewisse Zahlungsdienstanbieter oder Zahlungsverfahren bieten bekanntlich eine höhere Sicherheit vor Betrügern, Widerrufen usw.
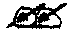 Anonymität, die bei der Verwendung jedes Geldkontos des Benutzers gewährleistet wird.
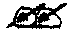 Standort des Benutzers, wie er vom Standortbestimmungsmodul 300 ermittelt wird. Ein Benutzer kann beispielsweise definieren, dass er die Kreditkartenfunktion seines Wallets nur verwenden will, wenn er sich im Ausland befindet. Gewisse Zahlungsdienstanbieter können Zahlungsdienste nur innerhalb eines bestimmten geographischen Gebiets freigeben.
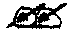 Identität des Mobilfunknetzes, in welchem der Mobilteilnehmer angemeldet ist. Ein Zahlungsdienstanbieter kann zum Beispiel entscheiden, dass er ein bestimmtes Angebot nur Mobilteilnehmern, die in einem bestimmten Mobilfunknetz angemeldet sind, anbieten will.
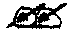 Verfügbarer Kommunikationskanal zwischen dem Anbieter-Zahlungsterminal 2 und dem Mobilteilnehmer-Zahlungsmodul 1. Ein Benutzer könnte zum Beispiel entscheiden, dass er nicht will, dass seine Kreditkartennummer über eine nicht geschützte direkte Bluetooth-Verbindung mit dem Anbieterterminal übertragen werden darf. SMS könnten für kleinere Beträge verwendet werden, während Zahlungsdienste, die über einen sichereren Übertragungskanal erfolgen für grössere Beträge bevorzugt werden können.
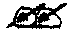 Verfügbares Authentifizierungsniveau zwischen Benutzer 1 und Zahlungsplattform 3 und/oder zwischen Benutzer 1 und Anbieter 2, und/oder zwischen Zahlungsplattform 3 und Anbieter 2.
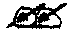 Verfügbares Verschlüsselungsverfahren zwischen Benutzer 1 und Zahlungsplattform 3 und/oder zwischen Benutzer 1 und Anbieter 2 und/oder zwischen Zahlungsplattform 3 und Anbieter 2.
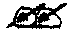 Wechselkurs mit den verschiedenen Geldkonten. Aktuelle Kurse können vom Bestimmungsmodul 310 direkt bei den Zahlungsdienstanbietern bekommen werden.
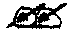 Gebühren bei der Verwendung der verschiedenen Geldkonten.
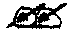 Zinsen der verschiedenen Geldkonten.
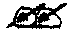 Verfügbarer Saldo auf den Wert- und Debitkonten und Saldo bis zur Kreditlimite auf den Kreditkonten.
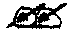 Periodische Kredit- oder Debitgrenzen für die verschiedenen Geldkonten.
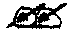 Verlangte Passwörter und/oder biometrische Schlüssel, die für die Zahlung mit einem bestimmten Geldkonto verlangt werden. Ein Benutzer kann zum Beispiel entscheiden, dass er biometrische Authentifizierungsverfahren prinzipiell nicht mag.
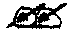 Telekommunikationskosten für die Transaktion. Ein Benutzer könnte zum Beispiel Zahlungsdienste verwenden, für welche er USSD anstatt SMS für den Transaktionsvorgang senden muss. Die Telekommunikationskosten können aus einem Fernserver (zum Beispiel in der Infrastruktur des Netzes 3) ferngeladen werden.
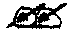 Zeit, Datum und/oder Wochentag. Ein Benutzer kann beispielsweise entscheiden, dass er seine Kreditkarte nur am Wochenende verwenden will.
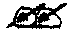 Logfile früherer Transaktionen.
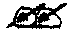 Verwendetes Mobilgerät oder Mobilgerättyp.
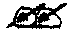 Weisse Liste von Anbietern und/oder Benutzern, die für eine Transaktion mit einem gewissen Geldkonto zugelassen sind. Weisse Listen können von Drittparteien vorbereitet und beispielsweise über das Internet ferngeladen werden.
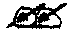 Schwarze Liste von Anbietern und/oder Benutzern, die für eine Transaktion mit einem gewissen Geldkonto gesperrt sind. Schwarze Listen können von Drittparteien vorbereitet und beispielsweise über das Internet ferngeladen werden.
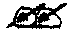 Anzahl von Transaktionen mit jedem Geldkonto während einer vorbestimmten Periode.
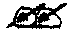 Profil des Benutzers, einschliesslich zum Beispiel sein Alter, sein Konto-Typ, andere soziologische Daten, usw.
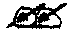 USW*.*

Je nach Ausführungsform können nur einige (möglicherweise sogar nur ein) Parameter vom Bestimmungsmodul verwendet werden. In einer bevorzugten Ausführungsform werden jedoch möglichst viele verfügbare Parameter verwendet.

In einer bevorzugten Variante kann der Benutzer und/oder der Anbieter selbst bestimmen, wie die oben genannten Parameter verwendet werden und welche Priorität jeder Parameter hat. Benutzer und/oder Anbieter können vorzugsweise über eine nicht-dargestellte WEB-Schnittstelle eingeben, welche Parameter verwendet werden, eine Prioritätsreihenfolge eingeben und/oder Grenzwerte oder Zahlen für bestimmte Parameter eingeben. Die Tabelle 1 zeigt als Beispiel, wie ein Benutzer 1 fünf Parameter zur automatischen Auswahl zwischen einem Wertkonto SVA1, einem Debitkartenkonto DK1 und einem Kreditkartenkonto KK1 eingeben kann:

**Tabelle 1**

| **Priorität** | **Parameter** | **SVA1** | **DK1** | **KK1** |
|---|---|---|---|---|
| **1** | Schwarze Liste | n/a | n/a | Anbieter aus der Schwarzliste vermeiden |
| **2** | Wochentag | Montag bis Freitag | täglich | täglich |
| **3** | Benutzerstandort | Nur CH | Nur CH | weltweit |
| **4** | Verfügbarer Saldo | >10.- | >100.- | >0.- |
| **5** | Transaktionsbetrag | [0; 100.-] | [50.-;200.-] | [80.-;Maximalbetrag] |
| **6** | Bonuspunkte | n/a | n/a | Immer verwenden wenn verfügbar |
| **7** | Gebühren | Minimieren | | |

Mit diesen Parametern kann ein Benutzer unter anderem eingeben, dass er das Wertkonto SVA1 nur von Montag bis Freitag, nur in der Schweiz und nur für Beträge kleiner als 100.-, nur wenn der verfügbare Saldo grösser ist als 10.-, verwenden will. Für Beträge zwischen 80.- und 100.- können im Prinzip alle drei Geldkonten verwendet werden; das Kreditkartenkonto wird jedoch bevorzugt, wenn sich der Anbieter nicht auf einer schwarzen Liste befindet, wenn die Zahlungstransaktion mit Bonuspunkten belohnt wird, und wenn sich der Mobilteilnehmer im Ausland befindet. In anderen Fällen, wo mehrere Geldkonten möglich sind, wird das Geldkonto bevorzugt, mit welchem die Zahlungsgebühren am tiefsten sind.

Andere Mittel zum Eingeben von Parametern und Prioritäten können vorgesehen werden. In einer bevorzugten Variante wird für jedes neue Geldkonto, das an ein Benutzermodul 10 oder an ein Anbieterterminal 2 gebunden wird, neue Defaults- bzw. Voreinstellungsparameter und Prioritäten definiert, die vom Benutzer vorzugsweise geändert werden können. Ein Wertkonto könnte beispielsweise derart definiert sein, dass es für kleine Beträge verwendet wird.

Andere Parameter und Prioritäten können von den Anbietern 2 und/oder von den Zahlungsdienstanbietern vorgesehen werden. Ein Anbieter könnte somit beispielsweise bestimmen, dass ein besonderes Produkt oder eine Dienstleistung nur über einen besonderen Zahlungsdienst gekauft werden kann. Ein Zahlungsdienstanbieter könnte seinen Dienst nur während einer begrenzten Zeitspanne beziehungsweise nur in einem begrenzten geographischen Gebiet anbieten. Alle andere oben erwähnten Parameter und Einschränkungen können somit auch von den Anbietern 2 und Zahlungsdienstanbietern festgelegt werden. Das Geldkontenbestimmungsmodul 310 bestimmt anhand von allen Parametern die von Benutzern, Anbietern 2 und Zahlungsdienstanbietern festgelegt sind, welches Paar von Geldkonten verwendet werden muss.

Bestimmte Parameter vom Geldkontenbestimmungsmodul, werden aus Ferngeräten heruntergeladen, unter anderem aus den Geräten der Anbieter 2, der Zahlungsdienstanbietern 4, aus den Mobilgeräten der Benutzer 1, aus den Finanzservern 5 und/oder von Drittparteien.

Ein Identifizierungsmodul 10 kann an mehrere Geldkonten desselben Zahlungsdienstanbieters gebunden sein. Zum Beispiel kann eine Karte mit mehreren Debitkonten einer Bank affiliiert sein. In diesem Fall kann der Benutzer und/oder die Bank auch bestimmte Geldkonten für bestimmte Arten von Transaktionen vorziehen.

In einer weiteren Ausführungsform befindet sich das Geldkontenbestimmungsmodul im Mobilgerät 1 und/oder im Identifizierungsmodul 10, zum Beispiel als Softwaremodul. In noch einer weiteren Ausführungsform befindet sich das Geldkontenbestimmungsmodul im Anbieterzahlungsterminal 2. In noch einer weiteren Ausführungsform befindet sich ein erstes Geldkontenbestimmungsmodul beim Mobilteilnehmer und ein zweites Geldkontenbestimmungsmodul beim Anbieter, wobei zwischen den beiden benannten Geldkontenbestimmungsmodulen eine Verhandlung stattfindet.

Aus Datenschutzgründen werden Zahlungstransaktionsdaten vorzugsweise transparent durch das Mobilfunknetz übertragen; der Betreiber der Zahlungsplattform 3 hat in diesem Fall keine Möglichkeit, auf die Zahlungsdaten der unterschiedlichen Benutzer oder Anbieter zuzugreifen. In einer Variante werden mindestens gewisse Zahlungstransaktionsdaten mindestens gewisser Zahlungsdienstanbieter (vorzugsweise mit Zustimmung der Benutzer oder Anbieter) der Zahlungsplattform zugänglich gemacht. Dies hat den Vorteil, dass die Zahlungsplattform mit den Zahlungsdaten verschiedener Benutzer, Anbieter und Zahlungsdienstanbieter zusätzliche Mehrwertdienste anbieten kann, einschliesslich:
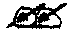 Sendung von konsolidierten Rechnungen an Benutzer und konsolidierten Gutschriften an Anbieter, in welchen Transaktionen, die über mehrere Zahlungsdienstanbieter durchgeführt wurden, zusammengefasst sind.
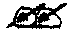 Bestimmung von konsolidierten Kredit- und/oder Debitgrenzen, um einen maximalen Ausgabebetrag pro Zeitspanne über mehrere Geldkonten festzulegen. Dies erlaubt eine höhere Sicherheit für den Benutzer, für die Anbieter und für die Zahlungsdienstanbieter, da die Gesamtausgaben mit allen Geldkonten eines Identifizierungsmoduls begrenzt sind.
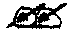 Detektion von Betrügen durch Überwachung des Verhaltens des Benutzers mit mehreren Geldkonten
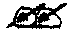 Geldtransaktionen zwischen mehreren Geldkonten, die an ein gemeinsames Identifizierungsmodul gebunden sind. Dies erlaubt zum Beispiel, ein Wert- oder Debitkonto aus einem anderen Geldkonto nachzuladen, zum Beispiel automatisch, wenn gewisse Kriterien erfüllt sind.
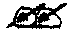 Ermittlung von Statistiken und Berichten über die Verwendung der verschiedenen Geldkonten. Dies erlaubt unter anderem Zahlungsdienstanbietern, Werbekampagnen und Angebote besser an die Bedürfnisse der Benutzer anzupassen.
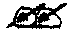 Gleichzeitige Sperrung beziehungsweise Entsperrung aller Geldkonten (die an ein gestohlenes oder verlorenes Identifizierungsmodul gebunden sind) durch den Betreiber oder durch den Benutzer.
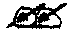 Bonuspunktesammlungsprogramme über mehrere Geldkonten mehrerer Zahlungsdienstanbieter.
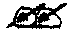 Direkte Transaktionen zwischen Geldkonten eines oder mehrerer Benutzer, ohne dass Transaktionsdaten an externe Zahlungsdienstanbieter gesendet werden. Dies erlaubt zum Beispiel, ein Prepaid-Konto eines Benutzers für die Verwendung des Mobilnetzwerkes mit einem anderen Geldkonto eines anderen Benutzers nachzuladen.
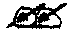 Verwendung von Benutzerparametern (Namen, Adresse, Solvenz, usw.), die für einen bestimmten Zahlungsdienst eingegeben wurden, für einen anderen, später affiliierten Zahlungsdienst eines anderen Zahlungsdienstanbieters.

In einer bevorzugten Variante werden Zahlungstransaktionsdaten anonymisiert, bevor sie der Zahlungsplattform zugänglich gemacht werden. Zu diesem Zweck wird die Benutzeridentifikation, die mit bestimmten Zahlungstransaktionsdaten verknüpft ist, in einem Anonymizer durch einen für den Netzbetreiber ungenügend kennzeichnenden Alias ersetzt. Auf diese Weise können anonyme Zahlungsdaten in der Zahlungsplattform gesammelt, verwendet und statistisch bewertet werden, ohne Datenschutzgesetze zu verletzen.

Das erfindungsgemässe Verfahren bzw. System kann unter anderem verwendet werden, um Geldtransaktionen von Benutzer zu Benutzer (P-to-P) durchzuführen.

## Patentansprüche

1. Zahlungsverfahren zwischen einem Mobilteilnehmer (1) und einem Anbieter (2) ,
wobei der Mobilteilnehmer über ein tragbares persönliches Identifizierungsmodul (10) verfügt, das zur Identifizierung in einem Mobilfunknetz (3) bestimmt ist,
wobei Zahlungstransaktionen über mindestens einen Zahlungsdienst erfolgen,
**dadurch gekennzeichnet, dass** der Zahlungsdienst, der für eine bestimmte Zahlungstransaktion verwendet wird, in Abhängigkeit von vorbestimmten Parametern von einem Bestimmungsmodul bestimmt wird.

2. Zahlungsverfahren gemäss Anspruch 1, in welchem:
das benannte Identifizierungsmodul an mehrere Geldkonten (100) eines oder mehrerer Zahlungsdienstanbieter (4) gebunden ist,
der benannte Anbieter an mehrere Geldkonten (200) eines oder mehrerer Zahlungsdienstanbieter (4) gebunden ist,
und in welchem das benannte Bestimmungsmodul das Paar von Geldkonten, das für eine Zahlungstransaktion verwendet wird, bestimmt.

3. Zahlungsverfahren gemäss Anspruch 2, mit folgenden Verfahrenschritten:
Bestimmung der Geldkonten des benannten Identifizierungsmoduls (10) und des benannten Anbieters (2), die für eine Zahlungstransaktion miteinander kompatibel sind,
wenn mehrere Paaren von Geldkonten (10; 200) gefunden werden, automatische Bestimmung des Paares, das für die Zahlungstransaktion verwendet wird, wobei zusätzliche Parameter verwendet werden.

4. Zahlungsverfahren gemäss einem der Ansprüche 1 bis 3, in welchem mindestens einer der folgenden benannten Parameter berücksichtigt wird:
Transaktionsbetrag, und/oder
Bonuspunkte, die bei der Verwendung jedes Geldkonto von einem Bonuspunktesammlungsprogramm zu bekommen sind, und/oder
vorbestimmten Mobilteilnehmerpräferenzen, und/oder
Sicherheitsfaktoren, die mit der Verwendung jedes Geldkontos für den Mobilteilnehmer und/oder für den Anbieter verbunden ist, und/oder
Anonymität, die bei der Verwendung jedes Geldkontos gewährleistet wird, und/oder
Standort des Benutzers, und/oder
Geographische Einschränkungen für die Verwendung bestimmter Geldkonten, und/oder
Verfügbare Kommunikationskanal zwischen Anbieterzahlungsterminal und Mobilteilnehmerzahlungsmodul, und/oder
Mobilfunknetz, in welchem der Mobilteilnehmer angemeldet ist, und/oder
Verfügbare Authentifizierungsniveau, und/oder
Verfügbare Verschlüsselungsverfahren, und/oder
Wechselkurs mit den verschiedenen Geldkonten, und/oder
Gebühren bei der Verwendung der verschiedenen Geldkonten, und/oder
Zinsen der verschiedenen Geldkonten, und/oder
Verfügbarer Saldo auf den Wert- und Debitkonten, und Saldo bis zur Kreditlimit auf den Kreditkonten, und/oder
Periodische Kredit- oder Debitgrenzen für die verschiedenen Geldkonten, und/oder
verlangte Passwörter und/oder biometrische Schlüssel, und/oder
Telekommunikationskosten für die Transaktion, und/oder
Zeit, und/oder
Datum, und/oder
Wochentag, und/oder
Logfile früherer Transaktionen, und/oder
Weisse Liste von Anbietern und/oder Benutzern, die für eine Transaktion mit einem gewissen Geldkonto zugelassen sind, und/oder
Graue Liste von verdächtigen Benutzern oder Anbietern, die noch nicht gesperrt sind, für die aber beispielsweise eine Kreditgrenze bald oder bereits überschritten ist, und/oder
Schwarze Liste von Anbietern und/oder Benutzern, die für eine Transaktion mit einem gewissen Geldkonto gesperrt sind, und/oder
Anzahl von Transaktionen mit jedem Geldkonto während einer vorbestimmten Periode, und/oder Profil des Benutzers.

5. Zahlungsverfahren gemäss einem der Ansprüche 1 bis 4, in welchem die benannten Geldkonten in einer Zahlungsplattform (31) in der Infrastruktur (3) des Mobilfunknetzes abgelegt sind.

6. Zahlungsverfahren gemäss einem der Ansprüche 1 bis 5, in welchem das verwendete Paar von Geldkonten anhand einer Zahlungsplattform (31) in der Infrastruktur (3) des Mobilfunknetzes bestimmt wird, wobei mindestens gewisse Zahlungstransaktionen über eine Vielzahl von an die benannte Zahlungsplattform verbundenen Zahlungsdienstanbietern (4) durchgeführt werden.

7. Zahlungsverfahren gemäss einem der Ansprüche 1 bis 5, in welchem die benannten Geldkonten mindestens ein prepaid oder postpaid-Mobilteilnehmerkonto zur Zahlung von Sprach- und Datenverbindungen des Mobilteilnehmers im Mobilfunknetz umfassen,
wobei das verwendete Paar von Geldkonten (100, 200) anhand einer Zahlungsplattform (31) in der Infrastruktur (3) des Mobilfunknetzes bestimmt wird,
wobei Zahlungstransaktionen zwischen den benannten Prepaid oder Postpaid-Mobilteilnehmerkontos in der benannten Zahlungsplattform durchgeführt werden.

8. Zahlungssystem mit folgenden Merkmalen:
eine Vielzahl von Anbietern (2) mit Anbieterzahlungsmodulen,
eine Vielzahl von Mobilteilnehmern (1) mit Mobilgeräten und Identifizierungsmodulen (10), die zur Identifizierung der Mobilteilnehmer (1) in einem Mobilfunknetz (3) bestimmt sind,
wobei die Mobilteilnehmer-Identifizierungsmodulen mit den benannten Anbieterzahlungsmodulen kooperieren können, um Zahlungstransaktionen zwischen Geldkonten der Mobilteilnehmer (100) und Geldkonten der Anbieter (200) durchzuführen,
wobei mindestens gewisse Mobilteilnehmer und mindestens gewisse Anbieter an mehrere Geldkonten (100; 200) gebunden sind,
**gekennzeichnet durch** ein Bestimmungsmodul (310), um den Zahlungsdienst, der für eine Zahlungstransaktion verwendet wird, in Abhängigkeit von vorbestimmten Parametern zu bestimmen.

9. Zahlungssystem gemäss Anspruch 8, in welchem das benannte Bestimmungsmodul das Paar von Geldkonten, das für eine Zahlungstransaktion verwendet wird, bestimmt.

10. Zahlungssystem gemäss Anspruch 9, in welchem mindestens gewisse benannte Geldkonten (100) des selben Mobilteilnehmers von verschiedenen Zahlungsdienstanbietern (4) betrieben werden.

11. Zahlungssystem gemäss einem der Ansprüche 8 bis 10, in welchem die benannten Geldkonten (100) unter anderem ein Prepaid- oder Postpaid Geldkonto des Mobilfunknetzes, in welchem die benannten Identifizierungsmodulen (10) registriert sind, umfassen.

12. Zahlungssystem gemäss einem der Ansprüche 8 bis 11, in welchem die benannten Geldkonten Debitkonten, Kreditkonten und Wertkonten umfassen.

13. Zahlungssystem gemäss einem der Ansprüche 8 bis 12, in welchem mindestens gewisse Verbindungen zwischen den benannten Anbietern (2) und den benannten Mobilteilnehmern (1) über ein Mobilfunknetz erfolgen.

14. Zahlungssystem gemäss einem der Ansprüche 8 bis 13, in welchem Verbindungen zwischen den benannten Anbietern und den benannten Mobilteilnehmern über mindestens einen der folgenden Übertragungskanäle erfolgen kann:
Bluetooth
IrdA,
WLAN,
SMS,
USSD,
WEB
WAP,
E-Mail,
IVR,
Menschlicher Operator.

15. Zahlungssystem gemäss einem der Ansprüche 8 bis 14, in welchem das benannte Geldkontenbestimmungsmodul (310) derart gestaltet ist, dass es sowohl Parameter von den Zahlungspartnern (1, 2) berücksichtigt, als auch Parameter, die innerhalb des Mobilfunknetzes bestimmt sind, um ein bestimmtes Paar von Geldkonten zu bestimmen, das für eine Zahlungstransaktion verwendet wird.

16. Zahlungssystem gemäss Anspruch 15, in welchem das benannte Geldkontenbestimmungsmodul (310) derart gestaltet ist, dass es auch Parameter von den Zahlungsdienstanbietern berücksichtigt, um ein bestimmtes Paar von Geldkonten zu bestimmen, das für eine Zahlungstransaktion verwendet wird.

17. Zahlungssystem gemäss einem der Ansprüche 15 bis 16, in welchem das benannte Geldkontenbestimmungsmodul (310) derart gestaltet ist, dass es auch Parameter von Drittparteien berücksichtigt, die über Internet gefunden werden, um ein bestimmtes Paar von Geldkonten zu bestimmen, das für eine Zahlungstransaktion verwendet wird.

18. Zahlungssystem gemäss einem der Ansprüche 8 bis 17, in welchem das benannte Geldkontenbestimmungsmodul derart gestaltet ist, dass es mindestens einen der folgenden Parameter berücksichtigt, um das Paar von Geldkonten zu bestimmen, das für eine Zahlungstransaktion verwendet wird:
Transaktionsbetrag, und/oder
Bonuspunkte, die bei der Verwendung jedes Geldkonto von einem Bonuspunktesammlungsprogramm zu bekommen sind, und/oder
vorbestimmte Mobilteilnehmerpräferenzen, und/oder
Sicherheitsfaktoren, die mit der Verwendung jedes Geldkontos für den Mobilteilnehmer und/oder für den Anbieter verbunden sind, und/oder
Anonymität, die bei der Verwendung jedes Geldkontos gewährleistet wird, und/oder
Standort des Mobilteilnehmers, und/oder
Geographische Einschränkungen für die Verwendung bestimmter Geldkonten, und/oder
Verfügbaren Kommunikationskanal zwischen Anbieterzahlungsmodul und Mobilteilnehmerzahlungsmodul, und/oder
Mobilfunknetz, in welchem der Mobilteilnehmer angemeldet ist, und/oder
Verfügbares Authentifizierungsniveau, und/oder
Verfügbare Verschlüsselungsverfahren, und/oder
Wechselkurs mit den verschiedenen Geldkonten, und/oder
Gebühren bei der Verwendung der verschiedenen Geldkonten, und/oder
Zinsen der verschiedenen Geldkonten, und/oder
Periodische Kredit- oder Debitgrenzen für die verschiedenen Geldkonten, und/oder
verlangte Passwörter und/oder biometrische Schlüssel, und/oder
Telekommunikationskosten für die Transaktion, und/oder
Zeit, und/oder
Datum, und/oder
Wochentag, und/oder
Logfile früherer Transaktionen, und/oder
Weisse Liste von Anbietern und/oder Benutzern, die für eine Transaktion mit einem gewissen Geldkonto zugelassen sind, und/oder
Graue Liste von verdächtigen Benutzern oder Anbietern, die noch nicht gesperrt sind, für die aber beispielsweise eine Kreditgrenze bald oder bereits überschritten ist, und/oder
Schwarze Liste von Anbietern und/oder Benutzern, die für eine Transaktion mit einem gewissen Geldkonto gesperrt sind, und/oder
Anzahl von Transaktionen mit jedem Geldkonto während einer vorbestimmten Periode, und/oder Profil des Benutzers.

19. Zahlungssystem gemäss Anspruch 18, in welchem das benannte Geldkontenbestimmungsmodul (310) derart gestaltet ist, dass es mindestens zwei der benannten Parameter berücksichtigt, um das Paar von Geldkonten (100, 200) zu bestimmen, das für eine Zahlungstransaktion verwendet wird.

20. Zahlungssystem gemäss Anspruch 19, in welchem das benannte Geldkontenbestimmungsmodul (310) derart gestaltet ist, dass es mindestens drei der benannten Parameter berücksichtigt, um das Paar von Geldkonten (100, 200) zu bestimmen, das für eine Zahlungstransaktion verwendet wird.

21. Zahlungssystem gemäss einem der Ansprüche 18 bis 20, in welchem das benannte Geldkontenbestimmungsmodul (310) derart gestaltet ist, dass es eine vordefinierte Liste von benannten Parametern berücksichtigt, wobei gewisse Parameter eine höhere Priorität haben.

22. Zahlungssystem gemäss einem der Ansprüche 8 bis 21, in welchem das benannte Bestimmungsmodul (310) in einer Zahlungsplattform (31) in der Infrastruktur des Mobilfunknetzes (3) vorgesehen ist.

23. Zahlungssystem gemäss einem der Ansprüche 8 bis 22, in welchem das benannte Geldkontenbestimmungsmodul (310) im benannten Mobilgerät des Mobilteilnehmers (1) vorhanden ist.

24. Zahlungssystem gemäss einem der Ansprüche 8 bis 23, in welchem das benannte Geldkontenbestimmungsmodul im benannten Mobilteilnehmeridentifizierungsmodul (10) vorhanden ist.

25. Zahlungssystem gemäss einem der Ansprüche 8 bis 24, in welchem das benannte Geldkontenbestimmungsmodul (310) im Zahlungsmodul des benannten Anbieters (2) vorhanden ist.

26. Zahlungssystem gemäss einem der Ansprüche 8 bis 25, in welchem ein erstes Geldkontenbestimmungsmodul beim Mobilteilnehmer (1) und ein zweites Geldkontenbestimmungsmodul beim Anbieter (2) vorhanden sind, wobei eine Verhandlung zwischen den beiden benannten Geldkontenbestimmungsmodulen stattfindet.

27. Zahlungssystem gemäss einem der Ansprüche 8 bis 26, in welchem das Geldkontenbestimmungsmodul derart gestaltet ist, dass es Wertkonten für kleine Beträge verwendet.

28. Zahlungssystem gemäss einem der Ansprüche 18 bis 27, mit Mitteln in der Infrastruktur des Mobilfunknetzes (3), um den benannten Standort des Mobilteilnehmers (1) zu bestimmen.

29. Zahlungssystem gemäss einem der Ansprüche 18 bis 27, mit Mitteln in mindestens gewissen Mobilteilnehmergeräten, um den benannten Standort des Mobilteilnehmers (1) zu bestimmen.

30. Zahlungssystem gemäss einem der Ansprüche 11 bis 29, in welchem mindestens gewisse Geldkonten (100; 200) in gewissen geographischen Bereichen gesperrt sind.

31. Zahlungssystem gemäss einem der Ansprüche 11 bis 30, in welchem mindestens gewisse Geldkonten (100; 200) für Verbindungen über bestimmten Übertragungskanäle gesperrt sind.
